Europäisches Patentamt

European Patent Office

Office européen des brevets

(19)

(11) **EP 0 645 176 B1**

(12) **EUROPÄISCHE PATENTSCHRIFT**

(45) Veröffentlichungstag und Bekanntmachung des Hinweises auf die Patenterteilung:
**12.03.1997 Patentblatt 1997/11**

(51) Int. Cl.$^6$: **B01D 61/44**

(21) Anmeldenummer: **94114172.3**

(22) Anmeldetag: **09.09.1994**

(54) **Ionenselektive Membran/Spacer-Einheiten**

Ion selective membrane spacer assembly

Ensemble membrane-entretoise à sélectivité ionique

(84) Benannte Vertragsstaaten:
**AT BE CH DE FR GB LI NL**

(30) Priorität: **28.09.1993 DE 4333019**

(43) Veröffentlichungstag der Anmeldung:
**29.03.1995 Patentblatt 1995/13**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **Bauer, Bernd, Dipl.-Chem.**
  **D-66130 Fechingen (DE)**
- **Menzel, Thomas, Dipl.-Ing.**
  **D-70567 Stuttgart (DE)**
- **Kehl, Petra, Dipl.-Ing.**
  **D-70199 Stuttgart (DE)**

(56) Entgegenhaltungen:
| EP-A- 0 503 651 | WO-A-82/03994 |
| FR-A- 2 292 504 | GB-A- 877 239 |
| GB-A- 939 616 | US-A- 4 804 451 |

**Beschreibung**

Die Erfindung betrifft ionenselektive Membran/Spacer-Einheiten für die Dialyse, Elektrodialyse oder Elektrolyse.

Bei dem Membrantrennverfahren der Elektrodialyse ist stets das Ziel, aus einer Rohlösung ein Diluat und ein Konzentrat zu schaffen, wobei sowohl Diluat als auch Konzentrat als Produktstrom betrachtet werden können.

Bei Entsalzungen, wie z.B. bei der Brackwasserentsalzung, bei der Enthärtung von Kesselwasser oder Brauchwasser, bei der Vollentsalzung von Leitungswasser, oder bei der Abtrennung von Schwermetallen aus Prozeßwässern galvanischer Bäder ist das Diluat als Produktstrom zu betrachten. Hierbei wird allgemein eine maximale Abreicherung angestrebt. Dies führt jedoch zu einem Absinken der elektrischen Leitfähigkeit des Diluatkreislaufes und zu einem Anstieg des elektrischen Widerstandes. Damit steigen mit zunehmender Entsalzung die Prozeßkosten und die maximal erlaubten Stromdichten sinken, woraus eine Erhöhung der Investitionskosten (Membrankosten) resultiert.

Vergleichbare Probleme ergeben sich bei der elektrodialytischen Abtrennung wenig leitfähiger, wenig beweglicher, wenig dissoziierter oder höher molekularer Verbindungen aus wässrigen Lösungen. Typische Beispiele hierfür sind die Abtrennung schwacher organischer Säuren oder Aminosäuren, die Entsalzung von Molke oder die Denitrifikation von Trinkwasser mittels konventioneller Elektrodialyse.

Eine weitere allgemeine, und für die Elektrodialyse mit bipolaren Membranen typische Problemstellung ergibt sich aus der Tatsache, daß im sauren bzw. basischen Konzentrat eine Protonierung bzw. Deprotonierung statt findet, die bei nicht vollständig dissoziierten Verbindungen zu einem Absinken der Leitfähigkeit führt. Beispiel hierfür ist die Abtrennung von Ammoniumsalzen bzw. von schwachen organischen Säuren. Diese werden in der jeweiligen Konzentratkammer neutralisiert und liegen damit in nicht leitfähiger Form vor. Dies ist etwa bei der Abtrennung von Ammoniumlactat aus einer Fermentation der Fall.

Bei der Anwendung bipolarer Membrantechnik zur Abtrennung wenig dissoziierter Komponenten resultiert somit ein hoher Ohm'scher Widerstand in wenigstens einer der beiden Konzentratkammern. Die Zugabe von polymeren Leitelektrolyten zur Minderung des Ohm'schen Widerstandes ist für den Langzeitbetrieb ungeeignet.

Der Energiebedarf einer elektrodialytischen Abtrennung ist proportional dem dazu erforderlichen elektrischen Strom und proportional dem Widerstand einer sich wiederholenden Einheit, und es gilt die folgende Beziehung:

$$E_{pr} = I^2 \cdot n \cdot R \cdot t = \frac{I \cdot n \cdot R \cdot t \cdot z \cdot F \cdot Q \cdot \Delta C}{\xi}$$

| I | Strom | [A] |
|---|---|---|
| R | elektr. Widerstand eines Zellpaares | [W] |
| n | Zahl der Zellen in einem Stapel | [-] |
| t | Zeit | [h] |
| F | Faradaykonstante | $26.8 \; Ah \cdot eq^{-1}$ |
| z | elektrochemische Wertigkeit | [-] |
| Q | Volumenstrom der Rohlösung | $[m^3 \cdot h^{-1}]$ |
| $\Delta C$ | Konzentrationsdifferenz zwischen der Roh- und der Produktlösung | $[eq \cdot l^{-1}]$ |
| $\xi$ | Stromausbeute | [-] |

Damit wird deutlich, daß die Wirtschaftlichkeit von Elektrodialyseanlagen im Wesentlichen durch die hydrodynamischen Eigenschaften der Abstandhalter (Spacer) in den einzelnen Kammern bestimmt wird. Die Anforderungen, die an solche Spacer gestellt werden, sind:

- die mechanische Abstützung der Membran, um deren Beschädigung durch zu hohe Druckunterschiede zwischen den Kammern zu verhindern;
- die Erhaltung der Kammergeometrie bzw. einer konstanten Kammerhöhe;
- die Gewährleistung einer gleichmäßigen Durchströmung der Kammer und einer guten hydrodynamischen Durchmischung senkrecht zu den Membranen, um die anhaftende laminare Grenzschicht zu verringern;
- die Vermeidung von hydrodynamischen Druckverlusten.

Herkömmliche Spacer sind inaktive, d.h. nicht ionenleitfähige Gewebe, die ein weitmaschiges Netz bilden. Da ein inaktiver Spacer die Membranfläche desaktiviert, d.h. die Membran abschattet, ist eine minimale Kontaktfläche mit der Membran erwünscht.

Ferner ist es erstrebenswert, den elektrischen Widerstand in der Kammer, d.h. zwischen den Membranen zu verringern. Dies wird durch ein Befüllen der Kammer mit Ionenaustauscherharz erreicht. Die optimalsten Ergebnisse werden dabei mit einer dichtesten Packung monodisperser Harze, bzw. mit einem Gemisch zweier monodisperser Harze unterschiedlicher Größe erreicht. Im zuletzt genannten Fall füllt dabei das eine Harz die Lücken der dichten Kugelpackung des anderen Harzes aus. Mit einer solchen Anordnung sind jedoch die oben genannten hydrodynamischen Anforderungen, d.h. die mechanische Abstützung der Membran, die Erhaltung der Kammergeometrie, die Gewährleistung einer gleichmäßigen Durchströmung der Kammer und die Vermeidung von hydrodynamischen Druckverlusten nicht zu erfüllen. Außerdem werden die Kammern gezwungenermaßen dicker, was zu einer Erhöhung des Gesamtwiderstandes führt.

Der Zellwiderstand wird durch den Widerstand der Membranen, der Diluatkammer und der Grenzschicht und durch den Abschirmeffekt der Spacer bestimmt. Bei geringen Konzentrationen im Diluat jedoch wird eine praktische Anwendung der Elektrodialyse durch den hohen Ohm'schen Widerstand der Diluatkammer und durch eine zusätzlich starke Polarisation begrenzt. Es gibt keine Möglichkeit, eine Polarisation, d.h. einen Wechsel der Transportzahlen an der laminaren Grenzschicht, zu verhindern. Eine Verringerung der Polarisation ist jedoch durch eine Verminderung der Stromdichte erreichbar, und wird durch die Verwendung ionenleitfähiger Spacer ermöglicht. Dabei scheint der wesentliche Effekt aus einer Vergrößerung der Oberfläche zwischen Ionenaustauschermembranen und der Lösung zu resultieren. Bei geeigneter Geometrie sollte gleichzeitig die Dicke der laminaren Grenzschicht verringert werden. Die Abreicherung der laminaren Grenzschicht erfolgt in Systemen mit ionenleitfähigen Spacern in gleicher Weise, jedoch wird im Gegensatz zur konventionellen Elektrodialyse der Strom über eine größere Oberfläche verteilt, und damit die Stromdichte verringert. Der Grenzstrom wird damit durch die gesamte Spacerfläche und die Dicke der laminaren Schicht um die Spacer bestimmt. Mittels ionenleitfähiger Spacer kann so für Kesselspeisewasser eine Entsalzung auf kleiner 25 ppm Gesamtionengehalt erreicht werden.

Zusätzlich zu den oben genannten Anforderungen werden deshalb an ionenleitfähige Spacer noch folgende Bedingungen gestellt:

- Die Leitfähigkeit des Spacers/Harzes sollte größer sein als die Leitfähigkeit der umgebenden Lösung.

$$\theta = \frac{\sigma_{\text{mit ionenleitfähigem Spacer}}}{\sigma_{\text{neutraler Spacer}}} \gg 10$$

Für $\theta < 1$ erfolgt der Stromfluß vorwiegend über die Lösung und die Ionen werden erst unmittelbar vor der Membran über den Spacer transportiert. Bei geringen Stromdichten wird der Ionen-Transport direkt aus der Lösung in die Membran erfolgen, bei höheren Stromdichten dagegen übernehmen die ionenleitfähigen Spacer den Stromtransport.

- Der Spacer sollte die austauschenden Gruppen des weniger beweglichen Ions der Lösung tragen.
- Der Kontakt des Spacers zur Membran sollte maximal sein.
- Um an den Kontaktstellen von anionen- und kationenselektivem Gewebe keine Wasserspaltung zu erhalten, sollte der Spacer eine hohe Oberfläche besitzen, dünn sein und weit in die Kammer reichen. Eine Durchkontaktierung beider Membranen sollte jedoch verhindert werden, da dort kein Austausch von generiertem $H^+$ und $OH^-$ gegen Kationen und Anionen erfolgen kann.
- Die Leitfähigkeit der Diluatkammer sollte mindestens so groß sein, daß in einem offenen Stack keine Strom-Verluste über die Anströmkanäle möglich sind.

Kedem et al. beschreiben in "EDS - Sealed Cell Electrolysis" eine Methode zur Herstellung von mit Anionenaustauscherharz gefüllten Taschen aus Polyethylenmembranen. Die verschweißte Einheit besteht aus einem 0.4 mm dicken Spacer zwischen zwei heterogenen PE-Membranen. Nachteil dieser Taschen ist jedoch, daß die Hydrodynamik nur unzureichend erfüllt ist, so daß keine isotrope Durchströmung der Ionenaustauscherpackung gewährleistet wird, und gleichermaßen ein hoher Druckabfall über die Kammer akzeptiert werden muß. Weiterhin treten in Ionenaustauscherharzen typischerweise starke Volumenänderungen infolge einer beladungsabhängigen Quellung auf, die in den verschweißten Taschen nicht ausgeglichen werden können .

Desweiteren wurde als ionenleitfähiger Spacer ein oberflächenmodifiziertes, kationenselektives Gewebe an die Kationenaustauschermembran und ein anionenselektives Gewebe an die Anionenaustauschermembran gelegt (siehe z.B. FR-A-2292504). Es hat sich jedoch gezeigt, daß oftmals die ausschließliche Verwendung eines anionenselektiven Gewebes ausreicht, da die Beweglichkeit der Anionen meist geringer ist als die der Kationen und damit als geschwindigkeitsbestimmender Schritt der elektrodialytischen Abtrennung zu betrachten ist. Zur Herstellung wird ein multifilamentöses Netz mit einem vernetzten Anionenaustauscher beschichtet. Nachteilig ist jedoch, daß das weitmaschige Gewebe keinen ausreichenden Kontakt zu den Austauschermembranen hat, und daß die Ionenleitfähigkeit nicht im ausreichenden Maß erhöht wurde.

Bei einer elektrodialytischen Vollentsalzung kann durch einen weiteren störenden Nebeneffekt die Stromausbeute, und damit die Wirtschaftlichkeit des Verfahrens stark herabgesetzt werden, da hier in den benachbarten Kammern stark unterschiedlich konzentrierte Lösungen geführt werden. Dabei sind in allen kommerziell verfügbaren Elektrodialyse-Stacks die das Diluat und das Konzentrat führende Kanäle direkt benachbart. Dies führt zu dem als innere Leckage bezeichneten Problem von konvektiven Leckströmen vom Konzentrat in das Diluat und umgekehrt. Bei üblichen Trennproblemen sind innere Leckagen zwar nicht vermeidbar, aber meist zu vernachlässigen. Bei Vollentsalzungen dagegen kann ein Leckstrom von 1 ‰ bereits die Entsalzungsleistung äquilibrieren. Da innere Leckagen meist durch unvollständige Abpressung zwischen Membran und äußerer Dichtung auftreten, sollten sie durch zusätzliche Dichtungsmaßnahmen zu vermeiden sein.

Aufgabe der vorliegenden Erfindung ist es deshalb, ionenleitfähige Abstandhalter (Spacer) bereit zu stellen, die gleichzeitig sowohl die Anforderungen an die elektrischen als auch an die mechanischen bzw. hydrodynamischen Eigenschaften erfüllen, d.h.

- die die mechanische Abstützung der Membran gewährleisten,
- die die Erhaltung der Kammergeometrie bzw. einer konstanten Kammerhöhe sicher stellen,
- die eine gleichmäßige Durchströmung der Kammer und eine gute hydrodynamische Durchmischung senkrecht zu den Membranen garantieren,
- die hydrodynamische Druckverluste vermeiden,
- die eine höhere Leitfähigkeit als die umgebende Lösung besitzen,
- die eine hohe Oberfläche besitzen und dünn sind, und
- die insbesondere zur Erreichung einer maximalen Wirksamkeit einen maximalen Kontakt zur ionenselektiven Membran aufweisen.

Insbesondere die letztgenannte Forderung steht im völligen Gegensatz zur Wirksamkeit eines konventionellen Abstandhalters, der keine Abschirmung der Membran erzeugen, sondern die Strömung direkt und turbulent an der Membran vorbeiführen soll.

Ferner sollen die Spacer durch einen allgemeinen und leicht realisierbaren Produktionsprozeß herstellbar sein.

Desweiteren soll es möglich sein, das Problem der inneren Leckage an technischen Elektrodialyse-Moduln zu beheben. Bei der Elektrodialyse und insbesondere bei der Elektrodialyse mit bipolaren Membranen wird aus einem verdünnten Diluatstrom ein hochleitfähiger Konzentratstrom erzeugt. Diese Kreisläufe werden im Elektrodialyse-Stapel durch mehrere benachbarte Anströmkanäle getrennt voneinander geführt. Konvektive Durchmischungen infolge einer inneren Leckage zwischen den Anströmkanälen würden der elektrolytischen Separation entgegenwirken und so die Produktlösungen verunreinigen bzw. die Stromausbeute drastisch erniedrigen.

Gelöst wird diese Aufgabe durch Membran/Spacer-Einheiten, bei denen der Spacer in ionenselektive Polymermembranen eingearbeitet ist, sodaß letztendlich modifizierte ionenselektive Polymermembranen erhalten werden, die neben der Ionenselektivität auch die eingangs genannten Anforderungen an Spacer erfüllen. Die eigentliche ionenselektive Membran besteht aus einem organischen Polymer, das mit anionischen oder kationischen Gruppen modifiziert ist, und der Spacer selbst stellt ein flächiges, poröses Gebilde mit einer Dicke zwischen $10^{-2}$ und $10^{-4}$ m und mit Porendurchmessern zwischen 1 and 100 nm dar und besteht aus einem mit anionischen und/oder kationischen Gruppen funktionalisierten Werkstoff. Bei der erfindungsgemäßen Membran/Spacer-Einheit ist also die mechanische Verstärkung der Membran so ausgestaltet, daß sie gleichzeitig auch die Funktion eines Spacers und damit eines Turbulenz-Promotors übernimmt.

Überraschenderweise wurde festgestellt, daß derartige Membran/Spacer-Einheiten alle oben genannten Anforderungen an Spacer bzgl. ihrer elektrischen und mechanischen bzw. hydrodynamischen Eigenschaften erfüllen. Die Forderung nach einer maximal hohen Oberfläche der Spacer bei minimalen hydrodynamischen Druckverlusten schien zunächst widersprüchlich, konnte aber erfindungsgemäß durch die Herstellung makroporöser Spacer gelöst werden, wobei die Spacer ionenaustauschende Eigenschaften zeigen.

Nach dem Stand der Technik, d.h. in der Praxis, werden große Membranflächen mit niedrigen Stromdichten verwendet. Dies ist jedoch aus wirtschaftlicher Sicht höchst unbefriedigend. Mit Hilfe der erfindungsgemäßen Membran/Spacer-Einheiten ist es nun möglich, mit kleineren Membranflächen bei höheren Stromdichten zu arbeiten. Dies bringt große wirtschaftliche Vorteile mit sich. Die reduzierte Membranfläche wird dabei durch die Ionenleitfähigkeit der Spacer ausgeglichen, d.h., der Spacer wird quasi als zusätzliche Membranfläche betrachtet. Mit Hilfe der erfindungsgemäßen Membran/Spacer-Einheit wird die Festionenkonzentration erhöht, woraus eine Steigerung der Ionenleitfähigkeit resultiert.

Der elektrische Gesamtwiderstand R einer Membran ergibt sich aus

$$R = \rho \frac{l}{A}$$

mit

$\rho$ = spezifischer Widerstand
l = Dicke der Membran
A = Fläche der Membran

Durch die Mikroporosität der Spacer wird die Membranfläche A scheinbar erhöht und damit der Gesamtwiderstand R reduziert.

Bevorzugte Ausführungsformen der erfindungsgemäßen Membran/Spacer-Einheiten weisen Spacer auf, deren Porendurchmesser zwischen 8 and 18 nm liegen, und/oder die Dicken von $3 \cdot 10^{-3}$ bis $5 \cdot 10^{-4}$ m zeigen.

Bei weiteren bevorzugten Ausführungsformen der erfindungsgemäßen Membran/Spacer-Einheiten bestehen die Spacer aus Keramik oder aus einem organischen Polymer, wobei thermoplastische Polymere ganz besonders bevorzugt sind. Ohne Einschränkung der Allgemeinheit sind bevorzugte organische Polymere Polypropylen, Polyethylen, Polysulfon, Polyethersulfon, Polyphenylenoxid, Polyphenylensulfid, Polyetherketon, Polyetheretherketon, Polyetheretherketonketon, Polystyrol oder eine Mischung derselben.

Bei weiteren bevorzugten Ausführungsformen der erfindungsgemäßen Membran/Spacer-Einheiten enthalten die Spacer als anionische Gruppen schwach basische sekundäre oder tertiäre Amino-Gruppen, stark basische quartäre Ammonium-Gruppen, stark basische quartäre Phosphonium-Gruppen oder tertiäre Sulfonium-Gruppen oder eine Mischung derselben.

Bei weiteren bevorzugten Ausführungsformen der erfindungsgemäßen Membran/Spacer-Einheiten sind die kationischen Gruppen der Spacer stark saure Sulfonsäure-Gruppen oder Methylensulfonsäure-Gruppen, schwach saure Carboxyl-Gruppen oder Phosphonium-Gruppen, saure arsenische oder saure selenische Gruppen oder eine Mischung derselben.

Die Spacer der erfindungsgemäßen Membran/Spacer-Einheiten können aus Hohlfasermembranen bestehen, die nach bekannten Methoden mit anionischen und/oder kationischen Gruppen modifiziert wurden und zu einem Gewebe verarbeitet sind.

Desweiteren können die Spacer ein mit anionischen und/oder kationischen Gruppen modifiziertes Gewebe sein, das aus porösen und/oder nicht-porösen Polymerfäden und/oder -hohlfäden besteht.

Ebenso ist es möglich, daß die Spacer aus porösen und/oder nicht-porösen Polymerfäden und/oder Polymerhohlfäden bestehen, die nach bekannten Methoden mit anionischen und/oder kationischen Gruppen modifiziert wurden und zu einem Gewebe verarbeitet sind.

Weitere Ausführungsformen der erfindungsgemäßen Membran/Spacer-Einheiten haben Spacer, die aus einem porösen Polymerfilm bestehen, der nach bekannten Methoden mit anionischen und/oder kationischen Gruppen modifiziert ist.

Ebenso ist es möglich, daß kommerzielle Ionenaustauschermembranen erfindungsgemäß zu makroporösen, ionenleitfähigen Spacern verarbeitet werden.

Desweiteren können poröse Filtrationsmembranen nach bekannten Methoden mit anionischen und/oder kationischen Gruppen modifiziert und erfindungsgemäß als Spacer eingesetzt werden.

Bei weiteren Ausführungsformen der erfindungsgemäßen Membran/Spacer-Einheiten sind diese außerhalb der effektiven Membranfläche mit einer Dichtung versehen, die bevorzugt aus einem Elastomer, aus einem Transferklebeband, oder aus einem thermoplastischen Polymer besteht.

Die Herstellung der Spacer für die erfindungsgemäße Membran/Spacer-Einheit kann auf vielfältige Art und Weise geschehen. So ist es z.B. möglich, Hohlfasermembranen nach bekannten Methoden mit anionischen und/oder kationischen Gruppen zu modifizieren und diese dann nach üblichen Verfahren zu einem Gewebe zu verarbeiten.

Ebenso ist es möglich, die Hohlfasermembranen zuerst zu einem Gewebe zu verarbeiten, und dieses dann anschließend nach bekannten Verfahren mit anionischen und/oder kationischen Gruppen zu modifizieren.

Desweiteren kann ein Gemisch aus einem oder mehreren thermoplastischen Polymeren aus der Gruppe der olefinischen Polymere, der Kondensations- und der Oxidationspolymere durch thermische Fällung nach bekannten Verfahren zu Fäden oder Hohlfäden verformt werden. Diese Fäden oder Hohlfäden werden dann nach üblichen Methoden mit anionischen und/oder kationischen Gruppen modifiziert, und die modifizierten Fäden oder Hohlfäden zu Geweben verarbeitet.

Ebenso ist es möglich, ein Gemisch aus einem oder mehreren thermoplastischen Polymeren aus der Gruppe der olefinischen Polymere, der Kondensations- und der Oxidationspolymere durch thermische Fällung nach bekannten Verfahren zu Fäden oder Hohlfäden zu verformen, die resultierenden Fäden oder Hohlfäden zu Geweben zu verarbeiten, und die resultierenden Gewebe nach üblichen Methoden mit anionischen und/oder kationischen Gruppen zu modifizieren.

Es können aber auch bereits mit anionischen und/oder kationischen Gruppen modifizierte thermoplastische Polymere aus der Gruppe der olefinischen Polymere, der Kondensations- und der Oxidationspolymere eingesetzt werden. Diese werden dann durch thermische Fällung zu Fäden oder Hohlfäden verformt, und die resultierenden Fäden oder Hohlfäden zu Geweben verarbeitet.

Bei den drei letzt genannten Varianten kann die thermische Fällung der thermoplastischen Polymere unter Zugabe von porenbildenden Komponenten durchgeführt werden. Solche porenbildenden Komponenten zeichnen sich durch eine temperaturabhängige Mischungslücke im binären Phasendiagramm mit dem Polymeren aus, d.h. sie sind z.B. bei erhöhter Temperatur homogen mit der Polymerschmelze mischbar, entmischen sich jedoch beim Abkühlen oberhalb des Schmelzpunktes. Die Porenbildner sollten thermisch stabil bis zur Extrusionstemperatur und gegenüber dem Polymeren chemisch inert sein. Für Polypropylen und Polyethylen sind z.B. Paraffine, Fettamine und höhermolekulare Seifen geeignet.

Weitere Herstellungsverfahren der erfindungsgemäßen Spacer bestehen in einer Naß/Naß- oder in einer Trokken/Naß-Phaseninversion. Dabei können entweder noch nicht modifizierte, thermoplastische Polymere oder Mischungen davon eingesetzt werden oder bereits mit anionischen und/oder mit kationischen Gruppen modifizierte thermoplastische Polymere, jeweils aus der Gruppe der olefinischen Polymere, der Kondensations- und der Oxidationspolymere. Dabei werden homogene Lösungen der Polymere oder von Mischungen derselben nach bekannten Verfahren durch Naß/Naß- oder durch Trocken/Naß-Phaseninversion zu Polymerfilmen verarbeitet. Werden nicht modifizierte Polymere eingesetzt, so wird der resultierende Polymerfilm anschließend nach üblichen Methoden mit anionischen und/oder mit kationischen Gruppen modifiziert.

Ebenso ist es möglich, poröse Filtrationsmembranen nach bekannten Verfahren mit anionischen und/oder mit kationischen Gruppen zu modifizieren.

Die Herstellung der erfindungsgemäßen Membran/Spacer-Einheit kann auf zwei verschiedenen Wegen erfolgen.

Bei der ersten Variante wird aus einer homogenen Lösung eines ionenselektiven Polymers nach bekannten Methoden ein Film gefertigt, aus diesem das Lösungsmittel ganz oder teilweise entfernt, darauf der Spacer, d.h. das flächige, poröse Gebilde, durch Naß-Kaschieren aufgebracht und das Lösungsmittel entfernt.

Bei der zweiten Variante wird der Spacer, d.h. das flächige, poröse Gebilde, mit einer homogenen Lösung eines ionenselektiven Polymers beschichtet und das Lösungsmittel entfernt.

Als ionenselektive Polymere können all die Polymere eingesetzt werden, die zur Herstellung von Kationen- oder Anionenaustauschermembranen geeignet sind. Solche Polymere sind bei der Herstellung kationenselektiver Beschichtungen beispielsweise sulfoniertes Polystyrol, sulfoniertes Polysulfon, sulfoniertes Polyetheretherketon, aber auch Acrylsäure und viele andere. Bei der Herstellung von anionenselektiven Beschichtungen wird z.B. quaternisiertes bzw. chlormethyliertes Polysulfon oder Polystyrol, quaternisiertes bzw. bromiertes Polyphenylenoxid, Polyvinylpyridin oder Polyvinylimidazol verwendet.

Zur Vermeidung von inneren Leckagen sind weitere Ausführungsformen der erfindungsgemäßen Membran/Spacer-Einheiten auf den außerhalb der effektiven Membranfläche verbleibenden Fläche mit einer Dichtung versehen, in die die Anströmöffnungen gearbeitet sind. Diese Dichtung besteht vorzugsweise aus einem Elastomer, einem thermoplastischen Polymer oder einem Transferklebeband. Die Herstellung erfolgt z.B. in der Art und Weise, daß man nach dem Entfernen des Lösungsmittels die außerhalb der effektiven Membranfläche verbleibende Fläche mit einer Elastomer-Dispersion beschichtet, und daß man in die ausgehärtete Elastomer-Dispersion die Anströmöffnungen stanzt. Es ist aber auch möglich, daß man nach dem Entfernen des Lösungsmittels eine Dichtung auf die außerhalb der effektiven Membranfläche verbleibende Fläche aufklebt und in diese dann die Anströmöffnungen stanzt. Solche Dichtungen können z.B. aus einem Transferklebeband bestehen.

Die erfindungsgemäßen Membran/Spacer-Einheiten sind auch zum Einsatz in Elektrolysezellen geeignet. Bei der konventionellen Elektrolyse verursacht die Bildung von Gasblasen an Elektrodenoberflächen oder Gitternetzen häufig unerwünschte Nebeneffekte. Beispielsweise führt eine wachsende Einzelblase zu einer erheblichen Vergrößerung des Spannungsabfalls und damit zur lokalen Bildung von Wärmegradienten, die, falls sie nicht abgebaut werden, Verbrennungen "Hot Spots" zur Folge haben können. Diese Blasen wachsen schneller bei höheren Stromdichten und bei höheren Temperaturen, wobei ein rascheres Blasenwachstum einen größeren Ablöseradius bewirkt.

Die Ablösung von Gasblasen ist ein typisches Stoffaustauschproblem und damit mikroskopisch von der Oberflächenbeschaffenheit des Materials und makroskopisch von der Elektrolytströmung abhängig. Der Stofftransport im makroskopischen Bereich läßt sich durch die Geschwindigkeit und die Art der Zwangskonvektion beeinflussen und wird insbesondere im Bereich sehr hoher Stromdichten dominant. Bei kleineren Stromdichten jedoch wird der Stofftransport durch Oberflächenvorgänge bestimmt. Dabei lösen sich Gasblasen aus Vertiefungen der Oberfläche, deren Öffnungsradius größer als der Gleichgewichtsradius ist, und für den minimalen Radius ($R_{min}$) gilt:

$$R_{min} = \frac{2\sigma}{H(T) \cdot \Delta X}$$

$\sigma$ = Oberflächenspannung

H(T) = Henry Konstante

$\Delta X$ = Übersättigung

Aus der Literatur ist zu entnehmen, daß eine hydrodynamische Optimierung, beispielsweise der Spacer-Geometrie, nur eine begrenzte Verbesserung der elektrochemischen Eigenschaften einer Elektrolyse- oder Elektrodialyse-Einheit zuläßt. Ein verbesserter Austrag der Gasblasen ist durch Senken der Oberflächenspannung $\sigma$ des Spacermaterials zu erwarten. Um dies nach dem Stand der Technik zu erreichen, wird die Oberfläche eines kommerziellen Spacermaterials durch chemische Funktionalisierung, durch Beschichten oder durch Plasmamodifikation hydrophilisiert. Durch den Einsatz der erfindungsgemäßen Membran/Spacer-Einheiten in Elektrolysezellen wird auch dieses Problem gelöst.

Anhand von Ausführungsbeispielen wird die Herstellung der erfindungsgemäßen Spacer näher erläutert.

**Beispiel 1:** (Herstellung eines makroporösen Spacers)

Eine PP-Mikrofiltrationshohlfasermembran (Accurel$^{\circledR}$ von ENKA) wird durch Sulfochlorierung zu einer Ionenaustauschermembran funktionalisiert und zu einem Gewebe weiterverarbeitet.

**Beispiel 2:** (Herstellung eines makroporösen Spacers)

Eine 17 %-ige Lösung von Polyethersulfon mit sulfoniertem Polyetheretherketon (1.10 meq $\cdot$ g$^{-1}$) im Verhältnis 1:1 in N-Methylpyrrolidon mit Propionsäure (2:1) wird zu einem Faden oder Hohlfaden gesponnen und in Wasser koaguliert. Die Weiterverarbeitung erfolgt auf einer Webmaschine.

**Beispiel 3:** (Herstellung eines makroporösen Spacers)

Eine 17 %-ige Lösung von Polyethersulfon mit chlormethyliertem Polysulfon im Verhältnis 1:1 in N-Methylpyrrolidon wird zu einem Faden oder Hohlfaden gesponnen und in Wasser koaguliert. Danach wird das poröse Material in einer wäßrigen Lösung von DABCO (1.4-Diazabicyclo-[2.2.2]octan) quaternisiert. Die Weiterverarbeitung erfolgt auf einer Webmaschine.

**Beispiel 4:** (Herstellung eines makroporösen Spacers)

Eine 15 %-ige Lösung von radikalisch seitenkettenbromiertem Polyphenylenoxid in N-Methylpyrrolidon wird zu einem Faden oder Hohlfaden gesponnen und in Wasser koaguliert. Danach wird das poröse Material in einer wäßrigen Lösung von DABCO (1.4-Diazabicyclo-[2.2.2]octan) quaternisiert. Die Weiterverarbeitung erfolgt auf einer Webmaschine.

**Beispiel 5:** (Herstellung eines makroporösen Spacers)

Eine 16 %-ige Lösung von sulfoniertem Polyetheretherketon (0.75 meq $\cdot$ g$^{-1}$) in N-Methylpyrrolidon wird zu einem Faden oder Hohlfaden gesponnen und in Wasser koaguliert. Die Weiterverarbeitung erfolgt auf einer Webmaschine.

**Beispiel 6:** (Herstellung einer Membran/Spacer-Einheit)

Eine Kationenaustauschermembran wird durch Lösen eines sulfonierten Polyetheretherketons in N-Methylpyrrolidon, Rakeln und Abdampfen des Lösungsmittels hergestellt. Nach dem Rakeln wird das sulfonierte, makroporöse Gewebe durch Naß-Kaschieren aufgebracht und das Lösungsmittel wiederum abgedampft.

**Beispiel 7:** (Herstellung einer Membran/Spacer-Einheit)

In einer Beschichtungsmaschine wird ein sulfoniertes Gewebe aufgespannt. Nun wird mit einer Luftrakel die Lösung eines sulfonierten Polyetheretherketons in N-Methylpyrrolidon aufgebracht und das Lösungsmittel abgedampft.

**Beispiel 8:** (Herstellung einer Membran/Spacer-Einheit mit integrierter Dichtung)

Eine nach Beispiel 6 gefertigte Membran/Spacer-Einheit wird mit einer Maske der effektiven Membranfläche bedeckt und anschließend mit einer Elastomer-Dispersion (SBR-Latex, Acryl-Latex o.ä.) bestrichen. Nach Aushärten der Latex wird die Maske entfernt und die Anströmöffnungen in die integrierte Dichtung gestanzt.

**Beispiel 9:** (Herstellung einer Membran/Spacer-Einheit mit integrierter Dichtung)

Eine nach Beispiel 7 gefertigte Membran/Spacer-Einheit wird mit einer Maske der effektiven Membranfläche bedeckt und anschließend mit einer Elastomer-Dispersion (SBR-Latex, Acryl-Latex o.ä.) bestrichen. Nach Aushärten der Latex wird die Maske entfernt und die Anströmöffnungen in die integrierte Dichtung gestanzt.

**Beispiel 10:** (Herstellung einer Membran/Spacer-Einheit mit integrierter Dichtung)

Auf eine nach Beispiel 6 gefertigte Membran/Spacer-Einheit wird mit Hilfe eines Transferklebebandes die Dichtung aufgeklebt, verpresst und die Anströmöffnungen in die integrierte Dichtung gestanzt.

**Beispiel 11:** (Herstellung einer Membran/Spacer-Einheit mit integrierter Dichtung)

Auf eine nach Beispiel 7 gefertigte Membran/Spacer-Einheit wird mit Hilfe eines Transferklebebandes die Dichtung aufgeklebt, verpresst und die Anströmöffnungen in die integrierte Dichtung gestanzt.

**Patentansprüche**

1. Ionenselektive Membran/Spacer-Einheit bestehend aus einer Membran aus einem mit anionischen oder kationischen Gruppen modifizierten, organischen Polymer und einem Spacer mit einem flächigen, porösen Gebilde,

   - das aus einem mit anionischen oder kationischen Gruppen funktionalisierten Werkstoff besteht,
   - das eine Dicke zwischen $10^{-2}$ und $10^{-4}$ m aufweist, und
   - dessen Porendurchmesser zwischen 1 and 100 nm liegt, wobei der Spacer in die ionenselektive Membran eingearbeitet ist.

2. Membran/Spacer-Einheit nach Anspruch 1, **dadurch gekennzeichnet**, daß das flächige, poröse Gebilde Porendurchmesser zwischen 8 and 18 nm aufweist.

3. Membran/Spacer-Einheit nach Anspruch 1 oder 2, **dadurch gekennzeichnet**, daß das flächige, poröse Gebilde eine Dicke zwischen $3 \cdot 10^{-3}$ und $5 \cdot 10^{-4}$ m hat.

4. Membran/Spacer-Einheit nach einem oder mehreren der Ansprüche 1 bis 3, **dadurch gekennzeichnet**, daß das flächige, poröse Gebilde aus Keramik oder aus einem organischen Polymer besteht.

5. Membran/Spacer-Einheit nach Anspruch 4, **dadurch gekennzeichnet**, daß das organische Polymer ein thermoplastisches Polymer ist.

6. Membran/Spacer-Einheit nach Anspruch 4 oder 5, **dadurch gekennzeichnet**, daß das organische Polymer ein Polypropylen, ein Polyethylen, ein Polysulfon, ein Polyethersulfon, ein Polyphenylenoxid, ein Polyphenylensulfid, ein Polyetherketon, ein Polyetheretherketon, ein Polyetheretherketonketon ein Polystyrol oder eine Mischung derselben ist.

7. Membran/Spacer-Einheit nach einem oder mehreren der Ansprüche 1 bis 6, **dadurch gekennzeichnet**, daß die anionischen Gruppen des flächigen, porösen Gebildes schwach basische sekundäre und/oder tertiäre Amino-Gruppen und/oder stark basische quartäre Ammonium-Gruppen und/oder stark basische quartäre Phosphonium-Gruppen und/oder tertiäre Sulfonium-Gruppen sind.

8. Membran/Spacer-Einheit nach einem oder mehreren der Ansprüche 1 bis 7, **dadurch gekennzeichnet**, daß die kationischen Gruppen des flächigen, porösen Gebildes stark saure Sulfonsäure-Gruppen und/oder Methylensulfonsäure-Gruppen und/oder schwach saure Carboxyl-Gruppen und/oder Phosphonium-Gruppen und/oder saure arsenische und/oder saure selenische Gruppen sind.

9. Membran/Spacer-Einheit nach einem oder mehreren der Ansprüche 1 bis 8, **dadurch gekennzeichnet**, daß das flächige, poröse Gebilde aus mit anionischen oder kationischen Gruppen modifizierten und zu einem Gewebe verarbeiteten Hohlfasermembranen besteht.

10. Membran/Spacer-Einheit nach einem oder mehreren der Ansprüche 1 bis 8, **dadurch gekennzeichnet**, daß das flächige, poröse Gebilde aus einem mit anionischen oder kationischen Gruppen modifizierten Gewebe aus porösen und/oder nicht-porösen Polymerfäden und/oder -hohlfäden besteht,

**11.** Membran/Spacer-Einheit nach einem oder mehreren der Ansprüche 1 bis 8, **dadurch gekennzeichnet**, daß das flächige, poröse Gebilde aus mit anionischen oder kationischen Gruppen modifizierten und zu einem Gewebe verarbeiteten, porösen und/oder nicht-porösen Polymerfäden und/oder -hohlfäden besteht,

**12.** Membran/Spacer-Einheit nach einem oder mehreren der Ansprüche 1 bis 7, **dadurch gekennzeichnet**, daß das flächige, poröse Gebilde aus einem mit anionischen oder kationischen Gruppen modifizierten, porösen Polymerfilm besteht.

**13.** Membran/Spacer-Einheit nach einem oder mehreren der Ansprüche 1 bis 8, **dadurch gekennzeichnet**, daß das flächige, poröse Gebilde aus einer oder mehreren Ionenaustauschermembranen besteht.

**14.** Membran/Spacer-Einheit nach einem oder mehreren der Ansprüche 1 bis 8, **dadurch gekennzeichnet**, daß das flächige, poröse Gebilde aus einer mit anionischen oder kationischen Gruppen modifizierten, porösen Filtrationsmembran besteht.

**15.** Membran/Spacer-Einheit nach einem oder mehreren der Ansprüche 1 bis 14, **dadurch gekennzeichnet**, daß sie außerhalb der effektiven Membranfläche mit einer Dichtung versehen ist.

**16.** Membran/Spacer-Einheit nach Anspruch 15, **dadurch gekennzeichnet**, daß die Dichtung aus einem Elastomer besteht.

**17.** Membran/Spacer-Einheit nach Anspruch 15, **dadurch gekennzeichnet**, daß die Dichtung aus einem Transferklebeband besteht.

**18.** Membran/Spacer-Einheit nach Anspruch 15, **dadurch gekennzeichnet**, daß die Dichtung aus einem thermoplastischen Polymer besteht.

**19.** Verfahren zur Herstellung von ionenselektiven Membran/Spacer-Einheiten nach einem oder mehreren der Ansprüche 1 bis 18, wobei man aus einer homogenen Lösung eines ionenselektiven Polymers nach bekannten Methoden einen Film fertigt, wobei man aus diesem das Lösungsmittel ganz oder teilweise entfernt, und wobei man ein flächiges, poröses Gebilde aus einem mit anionischen oder kationischen Gruppen funktionalisierten Werkstoff mit einer Dicke zwischen 10-2 und 10-4 m und mit Porendurchmessern zwischen 1 and 100 nm durch Naß-Kaschieren auf den Polymerfilm aufbringt und das Lösungsmittel entfernt.

**20.** Verfahren zur Herstellung von ionenselektiven Membran/Spacer-Einheiten nach einem oder mehreren der Ansprüche 1 bis 18, wobei man ein flächiges, poröses Gebilde aus einem mit anionischen oder kationischen Gruppen funktionalisierten Werkstoff mit einer Dicke zwischen 10-2 und 10-4 m und mit Porendurchmessern zwischen 1 and 100 nm mit einer homogenen Lösung eines ionenselektiven Polymers beschichtet und das Lösungsmittel entfernt.

**21.** Verfahren nach Anspruch 19 oder 20, **dadurch gekennzeichnet**, daß man nach dem Entfernen des Lösungsmittels die außerhalb der effektiven Membranfläche verbleibende Fläche mit einer Elastomer-Dispersion beschichtet, und daß man in die ausgehärtete Elastomer-Dispersion die Anströmöffnungen stanzt.

**22.** Verfahren nach Anspruch 19 oder 20, **dadurch gekennzeichnet**, daß man nach dem Entfernen des Lösungsmittels eine Dichtung auf die außerhalb der effektiven Membranfläche verbleibende Fläche aufklebt und in diese die Anströmöffnungen stanzt.

**Claims**

**1.** An ion-selective membrane/spacer unit consisting of a membrane of an organic polymer modified with anionic or cationic groups and a spacer with a flat, porous structure,

- which consists of a material rendered functional by anionic or cationic groups,
- which has a thickness between $10^{-2}$ and $10^{-4}$ m, and
- whose pore diameter lies between 1 and 100 nm, wherein the spacer is worked into the ion-selective membrane.

2. A membrane/spacer unit according to claim 1, characterized in that the flat, porous structure has pore diameters between 8 and 18 nm.

3. A membrane/spacer unit according to claim 1 or 2, characterized in that the flat, porous structure has a thickness between $3 \cdot 10^{-3}$ and $5 \cdot 10^{-4}$ m.

4. A membrane/spacer unit according to one or more of claims 1 to 3, characterized in that the flat, porous structure consists of a ceramic or an organic polymer.

5. A membrane/spacer unit according to claim 4, characterized in that the organic polymer is a thermoplastic polymer.

6. A membrane/spacer unit according to claim 4 or 5, characterized in that the organic polymer is a polypropylene, a polyethylene, a polysulphone, a polyethersulphone, a polyphenylene oxide, a polyphenylene sulphide, a polyetherketone, a polyetheretherketone, a polyetheretherketoneketone, a polystyrol or a mixture thereof.

7. A membrane/spacer unit according to one or more of claims 1 to 6, characterized in that the anionic groups of the flat, porous structure are weakly basic secondary and/or tertiary amino groups and/or strongly basic quaternary ammonium groups and/or strongly basic quaternary phosphonium groups and/or tertiary sulphonium groups.

8. A membrane/spacer unit according to one or more of claims 1 to 7, characterized in that the cationic groups of the flat, porous structure are strongly acidic sulphonic acid groups and/or methylenesulphonic acid groups and/or weakly acidic carboxyl groups and/or phosphonium groups and/or acidic arsenic and/or acidic selenium groups.

9. A membrane/spacer unit according to one or more of claims 1 to 8, characterized in that the flat, porous structure consists of hollow fibre membranes modified with anionic or cationic groups and processed into a woven structure.

10. A membrane/spacer unit according to one or more of claims 1 to 8, characterized in that the flat, porous structure consists of porous and/or non-porous polymer threads and/or hollow threads modified with anionic or cationic groups.

11. A membrane/spacer unit according to one or more of claims 1 to 8, characterized in that the flat, porous structure consists of porous and/or non-porous polymer threads and/or hollow threads modified with anionic or cationic groups and processed into a woven structure.

12. A membrane/spacer unit according to one or more of claims 1 to 7, characterized in that the flat, porous structure consists of porous polymer film modified with anionic or cationic groups.

13. A membrane/spacer unit according to one or more of claims 1 to 8, characterized in that the flat, porous structure consists of one or more ion exchange membranes.

14. A membrane/spacer unit according to one or more of claims 1 to 8, characterized in that the flat, porous structure consists of a porous filtration membrane modified with anionic or cationic groups.

15. A membrane/spacer unit according to one or more of claims 1 to 14, characterized in that it is provided with a seal outside the effective membrane area.

16. A membrane/spacer unit according to claim 15, characterized in that the seal consists of an elastomer.

17. A membrane/spacer unit according to claim 15, characterized in that the seal consists of a transfer adhesive strip.

18. A membrane/spacer unit according to claim 15, characterized in that the seal consists of a thermoplastic polymer.

19. A method of making ion-selective membrane/spacer units according to one or more of claims 1 to 18, wherein a film is made by known methods from a homogenous solution of an ion-selective polymer, the solvent is wholly or partially removed from this and a flat, porous structure of a material rendered functional by anionic or cationic groups, with a thickness between $10^{-2}$ and $10^{-4}$ m and with pore diameters between 1 and 100 nm is applied to the polymer film by wet lamination and the solvent is removed.

20. A method of making ion-selective membrane/spacer units according to one or more of claims 1 to 18, wherein a flat, porous structure of a material rendered functional by anionic or cationic groups, with a thickness between $10^{-2}$ and $10^{-4}$ and with pore diameters between 1 and 100 nm is coated with homogenous solution of an ion-selective polymer and the solvent is removed.

21. A method according to claim 19 or 20, characterized in that the area remaining outside the effective membrane area is coated with an elastomer dispersion after the removal of the solvent and in that the inflow openings are stamped in the hardened elastomer dispersion.

22. A method according to claim 19 or 20, characterized in that the a seal is bonded on to the area remaining outside the effective membrane area after the removal of the solvent and the inflow openings are stamped therein.

**Revendications**

1. Ensemble membrane/entretoise à sélectivité ionique, composé d'une membrane, en un polymère organique modifié par des radicaux anioniques ou cationiques et une entretoise ayant une structure poreuse, plane,

   - composé d'une matière fonctionnalisée par des radicaux anioniques ou cationiques,
   - ayant une épaisseur comprise entre $10^{-2}$ et $10^{-4}$ m et,
   - dont le diamètre des pores est compris entre 1 et 100 nm, l'entretoise étant réalisée dans la membrane à sélectivité ionique.

2. Ensemble membrane/entretoise selon la revendication 1, caractérisé en ce que

   la structure poreuse plane a des diamètres de pores compris entre 5 et 18 nm.

3. Ensemble membrane/entretoise selon les revendications 1 ou 2,
   caractérisé en ce que
   la structure poreuse plane a une épaisseur comprise entre $3.10^{-3}$ et $5.10^{-4}$ m.

4. Ensemble membrane/entretoise selon une ou plusieurs des revendications 1 à 3,
   caractérisé en ce que
   la structure poreuse plane est en céramique ou en un polymère organique.

5. Ensemble membrane/entretoise selon la revendication 4,
   caractérisé en ce que
   le polymère organique est un polymère thermoplastique.

6. Ensemble membrane/entretoise selon les revendications 4 ou 5,
   caractérisé en ce que
   le polymère organique est choisi dans le groupe des polypropylène, polyéthylène, polysulfone, polyéthersulfone, polyphénylenoxyde, polyphénylsufure, polyéthercétone, polyétheréthercétone, polyétheréthercétonecétone, polystyrène ou un mélange de ceux-ci.

7. Ensemble membrane/entretoise selon une ou plusieurs des revendications 1 à 6,
   caractérisé en ce que
   les radicaux anioniques de la structure poreuse plane sont des radicaux amino secondaires et/ou tertiaires faiblement basiques et/ou des radicaux ammonium quaternaires fortement basiques et/ou des radicaux phosphonium quaternaires fortement basiques et/ou des radicaux sulfonium tertiaires.

8. Ensemble membrane/entretoise selon une ou plusieurs des revendications 1 à 7,
   caractérisé en ce que
   les radicaux cationiques de la structure poreuse plane sont des radicaux d'acide sulfonique et/ou des radicaux d'acide méthylènesulfonique fortement acides et/ou des radicaux carboxyle faiblement acides et/ou des radicaux phophonium et/ou des radicaux arséniques acides et/ou des radicaux séléniques acides.

9. Ensemble membrane/entretoise selon une ou plusieurs des revendications 1 à 8,
   caractérisé en ce que
   la structure poreuse plane est formée de membranes à fibres creuses modifiées par des radicaux anioniques ou cationiques et travaillées pour donner un tissu.

**10.** Ensemble membrane/entretoise selon une ou plusieurs des revendications 1 à 8,
caractérisé en ce que
la structure poreuse plane est un tissu modifié par des radicaux anioniques ou cationiques, formés de fils polymères poreux et/ou non poreux et/ou de fils polymères creux.

**11.** Ensemble membrane/entretoise selon une ou plusieurs des revendications 1 à 8,
caractérisé en ce que
la structure poreuse plane est formée de fils polymères poreux et/ou non poreux et/ou creux, modifiée avec des radicaux anioniques ou cationiques et travaillée pour donner un tissu.

**12.** Ensemble membrane/entretoise selon une ou plusieurs des revendications 1 à 7,
caractérisé en ce que
la structure poreuse plane est un film de polymère poreux modifié par des radicaux anioniques ou cationiques.

**13.** Ensemble membrane/entretoise selon une ou plusieurs des revendications 1 à 8,
caractérisé en ce que
la structure poreuse plane est formée d'une ou plusieurs membranes échangeuses d'ions.

**14.** Ensemble membrane/entretoise selon une ou plusieurs des revendications 1 à 8,
caractérisé en ce que
la structure poreuse plane est formée d'une ou plusieurs membranes de filtration, poreuses, modifiées par des radicaux anioniques ou cationiques.

**15.** Ensemble membrane/entretoise selon une ou plusieurs des revendications 1 à 14,
caractérisé en ce que
à l'extérieur de la surface effective de la membrane il est prévu un joint.

**16.** Ensemble membrane/entretoise selon la revendication 15,
caractérisé en ce que
le joint est un élastomère.

**17.** Ensemble membrane/entretoise selon la revendication 15,
caractérisé en ce que
le joint est une bande adhésive de transfert.

**18.** Ensemble membrane/entretoise selon la revendication 15,
caractérisé en ce que
le joint est un polymère thermoplastique.

**19.** Procédé de fabrication d'ensemble membrane/entretoise à sélectivité ionique selon une ou plusieurs des revendications 1 à 18 selon lequel, on fabrique à partir d'une solution homogène d'un polymère à sélectivité ionique, un film, selon des procédés connus, et on enlève de celui-ci le solvant totalement ou partiellement, et on applique une structure poreuse plane d'une matière fonctionnalisée par des radicaux anioniques ou cationiques ayant une épaisseur comprise entre $10^{-2}$ et $10^{-4}$ m et un diamètre de pores compris entre 1 et 100 nm, par marouflage par voie humide sur le film de polymère et on élimine le solvant.

**20.** Procédé de fabrication d'ensemble membrane/entretoise à sélectivité ionique selon une ou plusieurs des revendications 1 à 18 selon lequel, on revêt une structure poreuse plane d'une matière fonctionnalisée par des groupes radicaux anioniques ou cationiques, ayant une épaisseur comprise entre $10^{-2}$ et $10^{-4}$ m et un diamètre de pores compris entre 1 et 100 nm, avec une solution homogène d'un polymère à sélectivité ionique et on élimine le solvant.

**21.** Procédé selon les revendications 19 ou 20,
caractérisé en ce que
après élimination du solvant, on revêt la surface résiduelle de la surface effective de la membrane, à l'extérieur, avec une dispersion d'élastomère et en ce que dans la dispersion d'élastomère, durci, on matrice les orifices de passage de fluide.

**22.** Procédé selon la revendication 19 ou 20,

caractérisé en ce que

après enlèvement du solvant, on colle un joint sur la surface résiduelle de la membrane à l'extérieur de la surface effective de la membrane et on matrice dans ce joint les orifices de passage de fluide.